Europäisches Patentamt

European Patent Office

Office européen des brevets

(11) Publication number: **0 139 890**
**B1**

(12) **EUROPEAN PATENT SPECIFICATION**

(45) Date of publication of patent specification: **26.04.89**

(51) Int. Cl.⁴: **F 16 D 65/04**

(21) Application number: **84108866.9**

(22) Date of filing: **26.07.84**

(54) Friction pad and support for a disc brake.

(30) Priority: **31.08.83 US 528330**

(43) Date of publication of application:
**08.05.85 Bulletin 85/19**

(45) Publication of the grant of the patent:
**26.04.89 Bulletin 89/17**

(84) Designated Contracting States:
**BE CH DE FR GB IT LI NL SE**

(56) References cited:
**DE-A-2 800 502**
**DE-A-2 816 559**
**GB-A-2 031 535**
**US-A-3 972 393**

(73) Proprietor: **Rockwell International Corporation**
**600 Grant Street**
**Pittsburgh Pennsylvania 15219 (US)**

(72) Inventor: **Sheill, David Donald**
**24661 Broadview**
**Farmington Hills Michigan 48018 (US)**
Inventor: **Dettloff, David James**
**8385 21 Mile Road**
**Utica Michigan 48087 (US)**
Inventor: **Davidson, Donald James**
**5833 Rosebrook**
**Troy Michigan 48098 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

The present invention relates to a disc brake assembly and more specifically to an improved means for supporting friction pads in the disc brake assembly.

The present invention is particularly applicable to a disc brake assembly of the type which includes a rotor or disc mounted for rotation with a vehicle wheel and a floating caliper straddling the periphery of the rotor. The caliper is usually mounted on a support or torque plate by means permitting movement of the caliper in an axial direction relative to the torque plate and rotor. Brake pads are carried by the caliper on opposite sides of the rotor and are movable into contact with oppositely disposed friction braking surfaces of the rotor by actuating means usually driven by a fluid motor. In a floating caliper disc brake, each friction pad is located intermediate one leg of the caliper and the adjacent friction surface of the rotor. The actuating mechanism is usually carried by one leg of the caliper and serves to move the friction pad adjacent to that leg axially into contact with the rotor, the reaction force of the contact serving to draw the other leg of the caliper and the other friction pad into contact with the opposite surface of the rotor.

The present invention proceeds from the prior art represented by US-A3,972,393. The disc brake shown therein has disc brake pads with projections or extensions in the form of tabs which service to mount or support the disc brake pad for sliding movement relative to a caliper. Tabs have been provided at the circumferentially spaced edges of the brake pads to be slidably carried in grooves provided to the caliper. Supporting surfaces in the form of edges have been provided at the ends of brake pads and on tabs or projections provided to the brake pads to be slidably supported by complementary edges provided to the disc brake caliper. US-A-4,352, 414 discloses a friction pad having a supporting tab with radially converging edges slidably carried by circumferentially spaced, radially converging edges provided to a caliper aperture.

Although various arrangements are known for supporting friction pads within a disc brake assembly, some require additional elements for preventing inadvertent displacement of the friction pads away from their operative position and others require disassembly of parts or retraction of the actuating mechanism to replace the friction pads which may not be readily accomplished in the confines of the vehicle wheel end and in the area where such work is performed. Others relying on radially converging edges or angularly disposed surfaces to support the friction pad or to transmit torque to the supporting caliper require careful attention to tolerances during manufacture to assure proper fit and location of cooperating parts when the brake is assembled. The present invention avoids these problems by providing a disc brake assembly in which the friction pads do not require additional elements for securing the same in operative position and in which the friction pads are readily accessible for inspection or replacement purposes.

According to one aspect of the invention, a friction pad for a disc brake is provided which comprises a backing plate having a major portion defined by arcuate longitudinal edges of different radii of curvature joined by spaced lateral edges, friction material secured to one side of said major portion of said backing plate and a supporting portion of said backing plate comprising a tab having a head portion joined to said major portion of said backing plate by a neck portion of less circumferential length than said head portion, a surface joining said head portion to said neck portion and forming a shoulder at each end of said tab; the friction pad is characterized in that said shoulder at each end of said tab is non-symmetrical relative to the major portion of said backing plate whereby each of said shoulders may be slidably received on only one of a pair of corresponding non-symmetrical edges of a supporting member.

According to another aspect of the invention, a disc brake assembly is provided which includes a rotor having oppositely disposed friction surfaces, a caliper having a bridge extending across the periphery of said rotor and a pair of friction pads supported by said caliper opposite said friction surfaces of said rotor, each said friction pad comprising a backing plate having friction material secured to a major portion thereof and being defined by circumferentially spaced lateral edges and having a tab extending radially therefrom, each said tab having a head portion bounded by a pair of circumferentially spaced edges, a neck portion joining said head portion to said major portion of said backing plate, said neck portion bounded by a pair of circumferentially spaced edges, the distance between said circumferentially spaced edges of said head portion being greater than the distance between said circumferentially spaced edges of said neck portion and a pair of supporting surfaces, said supporting surfaces respectively joining one edge of said head portion to one edge of said neck portion to provide a stepped recess at each end of said tab, and an aperture in said bridge being defined on two sides by circumferentially spaced, axially extending stepped edges; according to the invention, the disc brake is characterized in that one of said stepped recesses on one of said friction pad tabs is defined by a supporting surface of greater circumferential length than the supporting surface of the other said recess of said tab, and in that the step of one of said stepped edges is of less circumferential length than the step in the other said edge and said one tab supporting surface of greater length, said stepped edges slidably receiving said stepped recesses of said one friction pad tab with said stepped supporting surface of greater length slidably engaging the stepped edge of greater circumferential length.

In the disc brake of the present invention, the friction pad having the non-symmetrical mounting tab can only be assembled to the stepped edges of the caliper aperture when the longer supporting surface is positioned on the stepped edge with the longer step.

The advantages offered by the present invention will become apparent from the following description of the embodiment shown in the accompanying drawings.

In the drawings, wherein like reference numerals refer to like parts:

Figure 1 is a front elevation of disc brake, partly in section incorporating the present invention;

Figure 2 is a sectional view taken along line 2-2 of Figure 1;

Figure 3 is a sectional view taken along line 3-3 of Figure 1;

Figure 4 is a view of a friction pad;

Figure 5 is a plan view of the friction pad backing plate of Figure 4;

Figure 6 is a side elevation of the friction pad of Figure 4;

Figure 7 i s a sectional view taken a long line 7-7 of Figure 2; and

Figure 8 is a front view of the spring of Figure 7.

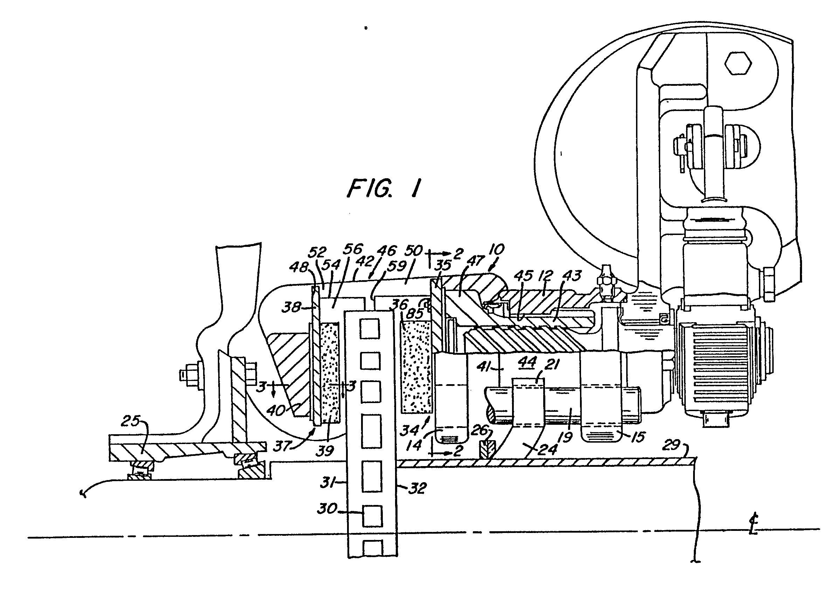

With reference to the drawings, Figure 1 shows a disc brake assembly generally designated by the numeral 10. The assembly 10 includes a floating caliper 12 mounted by means of circumferentially spaced, axially aligned pairs of bosses 14 and 15, on slide pin 19 only one of which is shown. The slide pins are respectively secured within bores provided to a boss such as the boss at the radially outer extremities of circumferentially spaced, radially extending arms such as the arm 24, of a brake supporting torque plate of spider 26. The torque plate 26 is provided with a circular array of apertures which receive a plurality of bolts not shown which in turn secure the support to torque plate 26 to a flange welded to a vehicle axle 29. The torque plate 26 could of course be welded directly to the axle 29. A rotor 30 having axially spaced. radially extending, oppositely disposed friction braking surfaces 31 and 32 is secured for rotation with a wheel hub 25 carried by the vehicle axle 29 adjacent the disc brake assembly 10.

The caliper 12 is a cast metal component comprised of a depending leg 40 extending radially inward adjacent the friction surface 31 of rotor 30, an oppositely disposed depending leg or wall 41 adjacent the friction surface 32 of rotor 30 and a bridge 42 straddling the periphery of rotor 30 and joining the leg 40 to the wall 41. The wall 41 is formed with a generally cylindrical housing 44 having a bore 45 slidably mounting a piston 43 formed integrally with a load applying plate 47. The contour of the load plate 47 is similar to the contour of the backing plate 35 of the friction pad 34 and moves the pad 34 axially into contact with the rotor friction surface 31 in response to actuation of the brake assembly. The piston 43 and load plate 47 may be moved by suitable hydraulic or mechanical actuating means. A power screw and nut actuating mechanism is illustrated in Figure 1.

The bridge 42 of caliper 12 is provided with an aperture 46 defined by a radially disposed edge 48 and a pair of circumferentially spaced, axially expanding, stepped edges 50 and 51. Stepped edge 50 is comprised of two surfaces 52 and 55 joined by a horizontal surface or step 54. Stepped edge 51 is comprised of two surfaces 56 and 59 joined by a horizontal surface or step 58. The circumferentially spaced stepped edges 50, 51 are each provided with a slot of which only slot 59 is shown in edge 51. The slots are located radially outward from the periphery of the rotor 30 and provide access means for friction pads to the caliper.

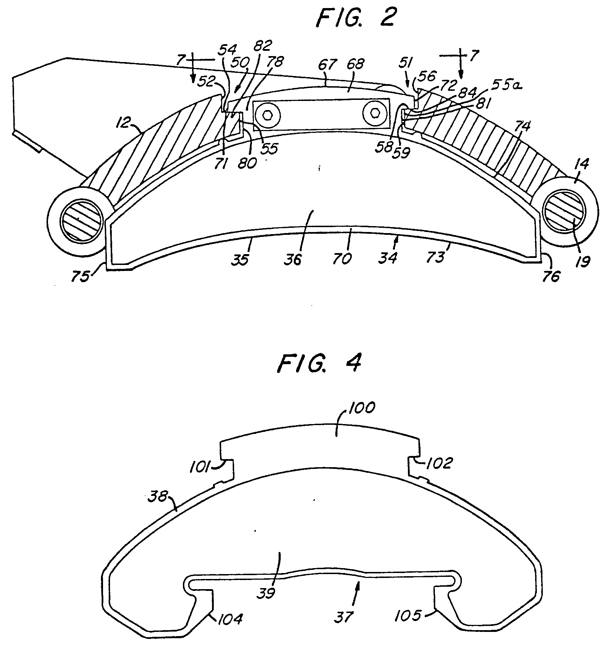

Friction pads 34, 37 are respectively comprised of backing plate 35, 38 with friction material 36, 39 secured thereto. The friction pad 34 as shown by Figure 2 is comprised of a metal backing plate 35 of uniform thickness having friction material 36 secured to a major portion 70 of the backing plate. The major portion 70 is defined by arcuate longitudinal edges 73 and 74 joined by circumferentially spaced lateral edges 75 and 76. The arcuate edge 74 is of greater radius than the edge 73 and extends radially outward to provide a supporting tab 67 of substantial circumferential length less than the distance between the lateral edges 75, 76.

The supporting tab 67 is comprised of a radially outer head portion 68 laterally bounded by a pair of circumferentially spaced edges 71 and 72 and a neck portion 78 laterally bounded by a pair of circumferentially spaced edges 80 and 81. The distance between the edges 71 and 72 is greater than the distance between the edges 80 and 81. A surface 82 joins the edges 71 and 80. A surface 84 joins the edges 72 and 78. The surfaces 71, 80, 82 and 72, 81, 84 provided stepped recesses at each end of the tab 67 and the surfaces 82 and 84 provide supporting surfaces or shoulders at each end of the tab 67.

The surfaces 52, 54, 55 and 56, 58, 59 provide a stepped edge 50, 51 at each circumferentially spaced side of the caliper aperture 46.

The supporting shoulder 82 and the step 54 in edge 50 are wider or of greater circumferential length relative to the arc of the caliper bridge 12 than the supporting shoulder 84 and the step 58 in edge 51. The width of the shoulder 82 is about 11 centimeters and the width of the step 58 is only about 10 centimeters. The shoulder 82 can not be seated on the step 58 and this non-symmetry on the tab 67, i.e., the difference in the width of the shoulder 82, 84 and the steps 54, 58 prevents tab 67 and friction pad 34 from being improperly assembled to the stepped edges 50 and 51.

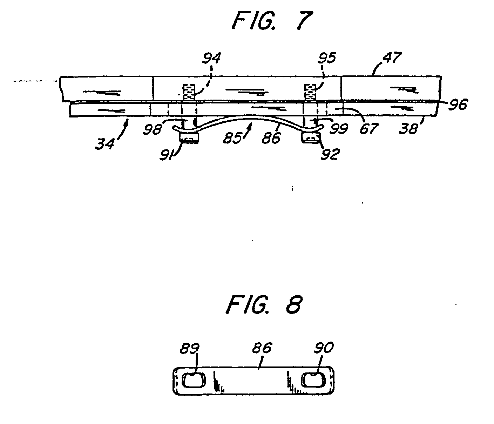

A spring assembly 85, as best shown by Figure 7 is also provided to bias the friction pad 34 into contact with the force transmitting load plate 47 and thereby prevent vibration of the metal backing plate.

The spring assembly is comprised of leaf spring 86 having a pair of apertures in the form of laterally extending slots 89, 90. A pair of fasteners 91 and 92 are secured in threaded bores 94 and 95 provided to the load plate 47. The fasteners are machine type bolts threaded at one end and having a shoulder and shank extending to a hexagonal socket head at the other end. A fastener 91 or 92 is provided to each aperture 89, 90 and threaded into the bores 94, 95 until the shoulder seat is against the surface of the load plate 47. A sheet of vibration damping paper 96 is secured to the rear surface of the metal backing plate 35 and the spring 86 biases the paper backed surface of the friction pad 34 into non-vibrating contact with the load plate 47. The diameter of the fasteners shanks 98 and 99 and the width of the slot-type aperture 89, 90 is such as to permit lateral movement of the friction pad to enable the edges 80 and 81 of the tab 67 to abut the surface 55, 59 of the stepped edge 50, 51 and transfer braking torque to the caliper bridge 12.

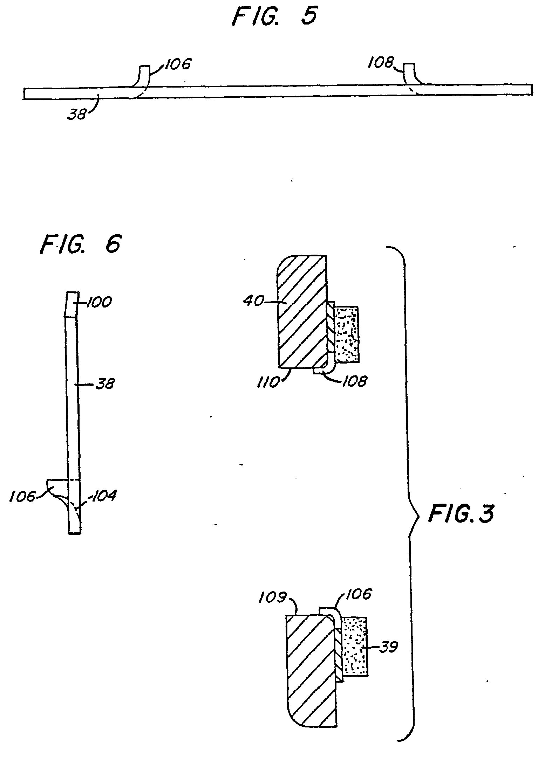

Friction pads 37 is also supported by a generally T-shaped tab 100 and stabilized by engagement with the depending caliper by 40 to prevent vibration of the friction pad backing plate. With reference to Figure 3-6, friction pad 37 is comprised of metal backing plate 38 of uniform thickness having friction material 39 secured to a major portion of one surface of the backing plate.

The friction pad tab 100 provides pairs of supporting surfaces or shoulders 101 and 102 which support the radially outer portion of the friction pad 37 on the steps 54 and 58 of the stepped edges 50 and 51.

The radially inner portion of the metal backing plate is die cut at 104 and 105 to provide a pair of arms 106 and 108, bent rearwardly to provide means stabilizing the friction pad 37 against vibration. During assembly, the tab 100 of friction pad 37 is seated on the stepped edges 50, 51 of the caliper apertures and, with reference to Figure 3, the rearwardly extending arms 106 and 108 are seated with an interference fit against the axially spaced surfaces 109 and 110 of a central recess provided at the lower end of the depending caliper leg 40. The arms 106 and 108 prevent substantial movement and vibration of the radially inner portion of the friction pad 37.

The supporting surfaces 101 and 102 of the tab 100 are symmetrical since the rearwardly extending arms 106 and 108 will engage the rotor 30, if the friction pad is reversed when it is seated on the stepped edges 50, 51 and prevent the brake from being improperly assembled.

When necessary, the friction pads 34 and 37 may be readily installed or withdrawn by removing the slide pin 19, pivoting the caliper 12 about the other slide pin. This movement of the caliper 12 withdraws the friction pads 34, 37 from their operative position adjacent the friction surfaces 31 and 32 of the rotot and enables the backing plate tabs 64, 67 to be slid axially along the stepped aperture edge surfaces 50, 51 into alignment with the access slot 59 thereby permitting radial withdrawal of the friction pads 34, 37 from their supporting relationship with the floating caliper 12, Replacement friction pads may be installed in the reverse manner. The tabs of the replacement friction pads are aligned with the access slot 59 and inserted into the caliper aperture 46 where the tabs are axially displaced into supporting relationship on the stepped aperture edges 50, 51 and spaced apart to permit the friction lining material to move across the oppositely disposed friction surfaces of the rotor. The biasing spring 86 is then secured by the fasteners 91 and 92 to the load plate 47 and the rearward extending arms 106, 108 of friction pad 37 are seated on the caliper leg recess surfaces 109 and 110. The caliper 12 is then pivoted back to align the bore of the caliper bosses 14 and 15 with the bore provided to the boss 21 of torque plate arms 24. The slide pin 19 is then replaced in the axially aligned bore of bosses 14, 15 and 21 and locked in position by suitable means.

The present invention thus provides a simple economical means for mounting disc brake friction pads to a caliper and means for biasing the friction pad into contact with other components to prevent vibration of the friction pad.

**Claims**

1. A friction pad (34) for a disc brake (10) comprising a backing plate (35) having a major portion (70) defined by arcuate longitudinal edges (73, 74) of different radii of curvature joined by spaced lateral edges (75, 76), friction material (39) secured to one side of said major portion (70) of said backing plate (35) and a supporting portion of said backing plate (35) comprising a tab (67) having a head portion (68) joined to said major portion (70) of said backing plate (35) by a neck portion (78) of less circumferential length than said head portion (68), a surface joining said head portion (68) to said neck portion (78) and forming a shoulder (82, 84) at each end of said tab (67), characterized in that said shoulder (82, 84) at each end of said tab (67) is non-symmetrical relative to the major portion (70) of said backing plate (35) whereby each of said shoulders (82, 84) may be slidably received on only one of a pair of corresponding non-symmetrical edges of a supporting member (54, 58).

2. The friction pad (34) defined by claim 1 wherein a shoulder (82) at one end of said tab (67) is of greater circumferential length than the shoulder (84) at the other end of said tab.

3. A disc brake assembly (10) including a rotor (30) having oppositely disposed friction surfaces (31, 32), a caliper (12) having a bridge (42) extending across the periphery of said rotor (30) and a pair of friction pads (34, 37) supported by said caliper (12) opposite said friction surfaces (31, 32) of said rotor (30), each said friction pad (34, 37) comprising a backing plate (35, 38) having friction material (36, 39) secured to a major portion thereof and being defined by circumferentially spaced lateral edges (75, 76) and having a tab (67, 100) extending radially therefrom, each said tab (67, 100) having a head portion (68) bounded by a pair of circumferentially spaced edges (71, 72), a neck portion (78) joining said head portion (68) to said major portion of said backing plate (35, 38), said neck portion (78) bounded by a pair of circumferentially spaced edges (80, 81), the distance between said circumferentially spaced edges (71, 72) of said head portion (68) being greater than the distance between said circumferentially spaced edges (80, 81) of said neck portion (78) and a pair of supporting surfaces (82, 84), said supporting surfaces (82, 84) respectively joining one edge of said head (68) portion to one edge of said neck portion (78) to provide a stepped recess (71, 80, 82; 72, 81, 84) at each end of said tab (67), and an aperture (46) in said bridge (12) being defined on two sides by circumferentially spaced, axially extending stepped edges (50, 51), characterized in that one of said stepped recesses (71, 80, 82; 72, 81, 84) on one of said friction pad tabs (34) is defined by a supporting surface of greater circumferential length than the supporting surface of the other said recess of said tab (67), and in that the step of one of said stepped edges (50, 51) is of less circumferential length than the step in the other said edge (50, 51) and said one tab (67) supporting surface (82, 84) of greater length, said stepped edges (50, 51) slidably receiving said stepped recesses (71, 80, 82; 72, 81, 84) of said one friction pad tab (67) with said stepped supporting surface of greater length slidably engaging the stepped edge of greater circumferential length.

4. The disc brake assembly (10) defined by claim 3 wherein said supporting surfaces (82, 84) provided to said one tab (67) run substantially normal to said circumferentially spaced edges (80, 81) of said neck portion (78) and each of said stepped edges (50, 51) includes a surface (52, 56) substantially normal to the supporting surface (82, 84) at that end of said tab (67) and adjacent a circumferentially spaced edge (80, 81) of said neck portion (78).

5. The disc brake assembly (10) defined by claim 4 wherein each of said stepped edges (50, 51) includes a surface (54, 58) substantially normal to one of said circumferentially spaced edges (80, 81) of said neck portion (78) of said tab (67) and said supporting surfaces (82, 84) are axially and laterally slidable relative to said surface (54, 58).

6. The disc brake assembly (10) defined by claim 5 wherein lateral movement of said supporting surfaces (82, 84) is limited by abutment of the circumferentially spaced edges (80, 81) of said neck portion (78) of said tab (67) with the respectively adjacent surface (55, 55a) of said stepped edges (50, 51) which are substantially normal to the supporting surface (82, 84) of the stepped recesses (71, 80, 82; 72, 81, 84) of said tab (67).

**Patentansprüche**

1. Bremsbelag (34) für eine Scheibenbremse (10) mit einer Stützplatte (35), die einen Hauptabschnitt (70) aufweist, der von bogenförmigen Längskanten (73, 74) mit unterschiedlichen Krümmungsradien gebildet ist, an die sich im Abstand verlaufende Seitenkanten (75, 76) anschließen, Reibungsmaterial (39), das an einer Seite des Hauptabschnitts (70) der Stützplatte (35) befestigt ist, wobei ein Halteabschnitt der Stützplatte (35) eine Lasche (67) aufweist, die mit einem Kopfteil (68) versehen ist, der mit dem Hauptabschnitt (70) der Stützplatte (35) über einen Halsteil (78) mit geringerer Umfangsausdehnung als der Kopfteil (68) verbunden ist, wobei der Kopfteil (68) über eine Fläche mit dem Halsteil (78) verbunden ist, die an jedem Ende der Lasche (67) eine Schulter (82, 84) bildet, dadurch gekennzeichnet, daß die Schulter (82, 84) an jedem Ende der Lasche (67) bezüglich des Hauptabschnitts (70) der Stützplatte (35) unsymmetrisch ist, wodurch jede der Schultern (82, 84) auf nur einem von zwei entsprechenden, unsymmetrischen Rändern eines Tragglieds (54, 58) verschiebbar aufgenommen werden kann.

2. Bremsbelag (34) nach Anspruch 1, bei dem eine Schulter (82) an einem Ende der Lasche (67) eine größere Umfangslänge als die Schulter (84) am anderen Ende der Lasche hat.

3. Scheibenbremse (10) mit einem Rotor (30), der entgegengesetzt gerichtete Reibflächen (31, 32) aufweist, einer Greifkluppe (12), die eine sich über den Umfang des Rotors erstreckende Brücke (42) aufweist, und zwei von der Greifkluppe (12) in einer Gegenüberlage zu den Reibflächen (31) des Rotors (30) gehaltenen Bremsbelägen (34, 37), wobei jeder Bremsbelag (34, 37) eine Stützplatte (35, 38) aufweist, an der an einem Hauptabschnitt Reibmaterial (36, 39) befestigt ist und die von in Umfangsrichtung im Abstand liegenden Seitenrändern (75, 76) begrenzt ist und eine radial von ihr abstehende Lasche (67, 100) aufweist, wobei jede Lasche (67, 100) einen von zwei in Umfangsrichtung im Abstand liegenden Rändern (71, 72) begrenzten Kopfteil (68) und einen den Kopfteil (68) mit dem Hauptabschnitt der Stützplatte (35, 38) verbindenden Halsteil (78) aufweist, wobei der Halsteil (78) von zwei in Umfangsrichtung im Abstand liegenden Rändern (80, 81) begrenzt ist, wobei der Abstand zwischen den in Umfangsrichtung im Abstand verlaufenden Rändern (71, 72) des Kopfteils (68) größer als der Abstand zwischen den in Umfangsrichtung liegenden Rändern (80, 81) des Halsteils (78) ist, zwei Halteflächen (82, 84), jeweils einen Rand des Kopfteils (68) mit einem Rand des Halsteils (78) so verbinden, daß eine abgestufte Ausnehmung (71, 80, 82; 72, 81, 84) an jedem Ende der Lasche (67) entsteht, und in der Brücke (12) eine Öffnung (46) gebildet ist, die an zwei Seiten durch in Umfangsrichtung im Abstand voneinander axial verlaufende, abgestufte Ränder (50, 51) begrenzt ist, dadurch gekennzeichnet, daß eine der abgestuften Ausnehmungen (71, 80; 72, 81, 84) auf einer der Bremsbelaglaschen (34) durch eine Haltefläche mit größerer Umfangslänge als die Haltefläche der anderen Ausnehmung der Lasche (67) begrenzt wird und daß die Stufe eines der abgestuften Ränder (50, 51) eine geringere Umfangslänge als die Stufe im anderen Rand (50, 51) und die Haltefläche (82, 84) der Lasche (67) größerer Umfangslänge aufweist, wobei die abgestuften Ränder (50, 51) die abgestuften Ausnehmungen (71, 82; 72, 81, 84) einer Bremsbelaglasche (67) verschiebbar erfassen und die abgestufte Haltefläche größerer Länge verschiebbar an dem abgestuften Rand größerer Umfangslänge anliegt.

4. Scheibenbremse (10) nach Anspruch 3, bei der die Halteflächen (82, 84) an der einen Lasche (67) im wesentlichen senkrecht zu den in Umfangsrichtung im Abstand verlaufenden Rändern (80, 81) des Halsteils (78) liegen und daß jeder der abgestuften Ränder (50, 51) eine Fläche (52, 56) umfaßt, die im wesentlichen senkrecht zu der Haltefläche (82, 84) an dem Ende der Lasche (67) und angrenzend an einen in Umfangsrichtung im Abstand verlaufenden Rand (80, 81) des Halsteils (78) liegt.

5. Scheibenbremse (10) nach Anspruch 4, bei der jeder der abgestuften Ränder (50, 51) eine Fläche (54, 58) aufweist, die im wesentlichen senkrecht zu einem der in Umfangsrichtung im Abstand verlaufenden Ränder (80, 81) des Halsteils (78) der Lasche (67) liegt, und die Halteflächen (82, 84) relativ zu der Fläche (54, 58) axial und seitlich verschiebbar sind.

6. Scheibenbremse (10) nach Anspruch 5, bei der die seitliche Bewegung der Halteflächen (82, 84) durch Anlage der in Umfangsrichtung im Abstand verlaufenden Ränder (80, 81) des Halsteils (78) der Lasche (67) an die jeweils angrenzende Fläche (55, 55a) der gestuften Ränder (50, 51) begrenzt ist, die im wesentlichen senkrecht zu der Haltefläche (82, 84) der abgestuften Ausnehmungen (71, 82; 72, 81, 84) der Lasche (67) verlaufen.

## Revendications

1 Plaquette de friction (34) pour frein à disque (10) comprenant une plaque dorsale (35) ayant une partie majeure (70) définie par des bords longitudinaux arqués (73, 74) ayant des rayons de courbure différents raccordés par des bords latéraux espacés (75, 76), une matière de friction (39) fixée sur l'un des côtés de cette partie majeure (70) de ladite plaque dorsale (35), et une partie de support de cette plaque dorsale (35) comprenant une patte (67) ayant une partie de tête (68) reliée à cette partie majeure (70) de ladite plaque dorsale (35) par une partie formant col (78) ayant une longueur circonférentielle inférieure à celle de ladite partie de tête (68), une surface reliant cette partie de tête (68) et cette partie formant col (78) et formant un épaulement (82, 84) à chaque extrémité de cette patte (67), caractérisée en ce que ledit épaulement (82, 84) est à chaque extrémité de cette patte (67) non symétrique par rapport à la partie majeure (70) de ladite plaque dorsale (35), de sorte que chacun desdits épaulements (82, 84) peut être reçu de façon coulissante sur seulement l'une des paires de bords non symétriques correspondants d'un élément de support (54, 58).

2. Plaquette de friction (34) conforme à la revendication 1, dans laquelle l'épaulement (82) à l'une des extrémités de ladite patte (67) a une longueur circonférentielle plus grande que l'épaulement (84) à l'autre extrémité de cette patte.

3. Ensemble de frein à disque (10) comprenant un rotor (30) ayant des surfaces de friction (31, 32) disposées à l'opposé l'une de l'autre, un étrier (12) ayant un pont (42) s'étendant sur la périphérie de ce rotor (30) et une paire de plaquettes de friction (34, 37) portée par ledit étrier (12) à l'opposé desdites surfaces de friction (31, 32) dudit rotor (30), chacune de ces plaquettes de friction (34, 37) comprenant une plaque dorsale (35, 38) ayant une matière de friction (36, 39) fixée à sa partie majeure et étant définie par deux bords latéraux espacés circonférentiellement (75, 76) et ayant une patte (67, 100) s'étendant radialement à partir de celle ci, chacune de ces pattes (67, 100) ayant une partie de tête (68) reliée par une paire de bords espacés circonférentiellement (71, 72), une partie formant col (78) reliant cette partie de tête (68) à cette partie majeure de ladite plaque dorsale (35, 38), ladite partie formant col (78) reliée par une paire de bords espacés circonférentiellement (80, 81), la distance entre ces bords espacés circonférentiellement (71, 72) de ladite Partie de tête (68) étant supérieure à la distance comprise entre lesdits bords espacés circonférentiellement (80, 81) de cette partie formant col (78) et une paire de surfaces de support (82, 84), ces surfaces de support (82, 84) reliant respectivement l'un des bords de cette partie de tête (68) à l'un des bords de cette partie formant col (78) pour créer une encoche étagée (71, 80, 82; 72, 81, 84) à chaque extrémité de ladite patte (67) et une ouverture (46) dans ledit pont (12) définie sur deux côtés par des bords étagés espacés (50, 51) circonférentiellement et s'étendant axialement, caractérisé en ce que l'une de ces encoches (71, 80, 82; 72, 81, 84) sur au moins l'une des pattes desdites plaquettes de friction (34) est définie par une surface de support ayant une longueur circonférentielle plus grande que la surface de support de l'autre encoche de ladite patte (67) et en ce que l'étage de l'un des bords étagés (50, 51) a une longueur circonférentielle plus petite que l'étage de l'autre bord (50, 51) et ladite surface de support (82, 84) de plus grande longueur de ladite patte (67), ces bords étagés (50, 51) recevant de façon coulissante lesdites encoches étagées (71, 80, 82; 72, 81, 84) de l'une des pattes (67) d'une plaquette de friction, ladite surface de support étagée de plus grande longueur venant en contact de façon coulissante avec le bord étagé de plus grande longueur circonférentielle.

4. Ensemble de frein à disque (10) conforme à la revendication 3, dans lequel lesdites surfaces de support (82, 84) créées sur l'une desdites pattes (67) sont sensiblement perpendiculaires auxdits bords espacés circonférentiellement (80, 81) de ladite partie formant col (78) et chaque bord étagé (50, 51) comprend une surface (52, 56) sensiblement perpendiculaire à la surface de support (82, 84) à l'extrémité de ladite patte (67) et adjacente à un bord circonférentiellement espacé (80, 81) de ladite partie formant col (78).

5. Ensemble de frein à disque (10) conforme à la revendication 4, dans lequel chacun desdits bords étagés (50, 51) comprend une surface (54, 58) sensiblement perpendiculaire à l'un desdits bords espacés circonférentiellement (80, 81) de ladite partie formant col (78) et lesdites surfaces de support (82, 84) sont axialement et latéralement coulissantes relativement à cette surface (54, 58).

6. Ensemble de frein à disque (10) conforme à la revendication 5, dans lequel le mouvement latéral desdites surfaces de support (82, 84) est limité par la butée de ces bords espacés circonférentiellement (80, 81) de la partie formant col (78) de ladite patte (67) avec la surface adjacente respective (55, 55a) desdits bords étagés (50, 51) qui sont sensiblement perpendiculaires à la surface de support (82, 84) des encoches étagées (71, 80, 82; 72, 81, 84) de ladite patte (67).

FIG. 1

FIG. 2

FIG. 4

2

*FIG. 5*

*FIG. 6*

*FIG.3*

## FIG. 7

## FIG. 8